# EUROPÄISCHE PATENTANMELDUNG

(11) **EP 4 125 185 A1**
(43) Veröffentlichungstag der Anmeldung: **01.02.2023**
(21) Anmeldenummer: 21188807.8
(22) Anmeldetag: 30.07.2021
(51) Int. Cl.: H02K 1/27, H02K 1/28

(54) **PERMANENTMAGNET**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)

(57) **Zusammenfassung**

Die Erfindung betrifft einen Permanentmagneten (1) für eine dynamoelektrische Maschine, insbesondere dynamoelektrische rotatorische Maschine (12), aufweisend eine Gestaltabweichung (2, 6, 7) an einer Oberfläche des Permanentmagneten (1), wobei die Gestaltabweichung (2, 6, 7) wenigstens eine Aufdickung (14) und wenigstens eine Vertiefung (15) umfasst, wobei eine Höhendifferenz (h) zwischen einer höchsten Stelle der Aufdickung (14) und einer tiefsten Stelle der Vertiefung (15) wenigstens 2% einer Dicke (d) des Permanentmagneten (1) und höchstens 20% der Dicke (d) des Permanentmagneten (1) ist.

## Beschreibung

Die Erfindung betrifft einen Permanentmagneten für eine dynamoelektrische Maschine.

In permanenterregten Synchronmaschinen eingesetzte metallische Magnete werden meist gepresst, gesintert und endbearbeitet, beispielsweise geschliffen bzw. gesägt. Durch diese Herstellungsverfahren wird eine glatte Oberfläche der Permanentmagnete erzeugt. Jedoch beeinflusst die Oberflächenstruktur des Permanentmagneten einen elektrischen Widerstand gegenüber dort im Motorbetrieb entstehenden hochfrequenten Strömen, die einen unerwünschten Einfluss auf die Temperatur und den magnetischen Fluss der Permanentmagnete haben.

Um den ohmschen Widerstand zu erhöhen werden Magnete derzeit auch segmentiert. Dies ist jedoch sehr aufwändig.

Der Erfindung liegt die Aufgabe zugrunde, Permanentmagnete zu schaffen, die einen erhöhten ohmschen Widerstand aufweisen.

Die Lösung der Aufgabe gelingt durch Anspruch 1, d.h. einen Permanentmagneten für eine dynamoelektrische Maschine, insbesondere dynamoelektrische rotatorische Maschine, aufweisend eine Gestaltabweichung an einer Oberfläche des Permanentmagneten, wobei die Gestaltabweichung wenigstens eine Aufdickung und wenigstens eine Vertiefung umfasst, wobei eine Höhendifferenz zwischen einer höchsten Stelle der Aufdickung und einer tiefsten Stelle der Vertiefung wenigstens 2% einer Dicke des Permanentmagneten und höchstens 20% der Dicke des Permanentmagneten ist.

Die Erfindung bietet den Vorteil, dass eine derart raue Magnetoberfläche bzw. strukturierte Magnetoberfläche den ohmschen Widerstand gegen hochfrequente Wechselströme erhöht, zudem ist eine verbesserte Entwärmung gegeben.

Durch die beschriebene Aufdickung und die beschriebene Vertiefung wird die Oberfläche des Permanentmagneten vergrößert, was sich positiv auf die Entwärmung auswirkt. Zudem führen Vertiefung und Aufdickung bzw. eine Mehrzahl an Vertiefungen sowie eine Mehrzahl an Aufdickungen zu verstärkten Verwirbelungen der Luft, was sich ebenso positiv auf die Entwärmung auswirkt.

Vorteilhaft ist eine Ausführungsform, wonach die Höhendifferenz wenigstens 5% der Dicke des Permanentmagneten und höchstens 20% der Dicke des Permanentmagneten ist.

Ein typischer Permanentmagnet ist beispielsweise 1,5 mm bis 5 mm dick. Am Beispiel eines 3 mm dicken Permanentmagneten erläutert liegt die Höhendifferenz bei wenigstens 0,06 mm (entspricht hierbei 2%), vorteilhaft bei wenigstens 0,15 mm, und höchstens bei 0,6 mm.

Es sind jedoch auch andere Dicken des Magnets denkbar.

Vorteilhaft ist eine Ausführungsform, wonach die Höhendifferenz wenigstens 10 µm und höchstens 1.000 µm ist.

Vorzugsweise ist die Höhendifferenz wenigstens 10 µm und höchstens 500 µm.

Vorteilhaft ist eine Ausführungsform, wonach die Gestaltabweichung als Welligkeit und/oder in Form von Rillen und/oder in Form von Riefen und/oder in Form von halbkreisförmigen Kanälen ausgebildet ist, eine Kombination der genannten Gestaltabweichungen ist möglich.

Am Beispiel eines Rotors mit außenliegenden Permanentmagneten wird zudem eine Kombination der Gestaltabweichungen erläutert. In diesem Beispiel weist eine Oberfläche des Permanentmagneten, welche in Richtung eines Luftspalts zeigt, die Gestaltabweichung in Form von halbkreisförmigen Kanälen auf.

Die Oberflächen des Permanentmagneten, welche seitlich angeordnet sind, also in Richtung eines benachbarten Permanentmagneten zeigen, können hierbei beispielsweise Riefen aufweisen.

Vorteilhaft ist zudem eine Ausführungsform wonach die Gestaltabweichung in Form von kegelförmigen Aufdickungen ausgebildet ist.

Diese auch Kegelstruktur genannte Gestaltabweichung ist besonders vorteilhaft hinsichtlich einer Stromverdrängung und schafft einen hohen ohmschen Widerstand.

Vorzugsweise sind die kegelförmigen Aufdickungen gleichmäßig über die Oberfläche des Permanentmagneten verteilt.

Vorteilhaft ist zudem eine Ausführung, wonach die Gestaltabweichung als Rändelung ausgebildet ist.

Hierbei eignen sich verschiedene Arten einer Rändelung, beispielsweise Linksrändel, Rechtsrändel, Rändel mit Achsparallelen, Riefen, Rändel mit erhöhten Spitzen, Rändel mit vertieften Spitzen, Kreuzrändel sowohl mit erhöhten als auch vertieften Spitzen, wie auch Kreisrändel. Auch eine Kombination der genannten Rändelarten ist denkbar.

Vorteilhaft ist zudem eine Ausführungsform, wonach eine Breitendifferenz zwischen zwei benachbarten Aufdickungen wenigstens 10 µm und höchstens 300 µm ist.

Vorteilhaft ist eine Ausführungsform, wonach der Permanentmagnet wenigstens eine weitere Gestaltabweichung aufweist, wobei die Höhendifferenz der Gestaltabweichung wenigstens 10 µm und höchstens 100 µm ist, wobei die Höhendifferenz der weiteren Gestaltabweichung wenigstens 300 µm und höchstens 500 µm ist.

Hierbei werden vorteilhaft zwei voneinander verschiedene Gestaltabweichungen auf dem bzw. am Permanentmagneten kombiniert. Beispielsweise kann die zum Luftspalt zeigende Oberfläche die Gestaltabweichung aufweisen und eine seitliche Oberfläche des Permanentmagneten die weitere Gestaltabweichung.

Ferner ist auch denkbar, dass axial betrachtet ein vorderer Bereich der Oberfläche, welche in Richtung des Luftspalts zeigt, die Gestaltabweichung aufweist und ein hinterer Teil die weitere Gestaltabweichung.

Die Lösung der Aufgabe gelingt ferner durch einen Rotor für eine dynamoelektrische rotatorische Maschine, aufweisend ein Rotorpaket, eine Mehrzahl an Permanentmagneten sowie eine Bandage zur Fixierung der Permanentmagnete am Rotorpaket, wobei die Bandage einen Bandagenfaden aufweist, wobei die Permanentmagnete eine Gestaltabweichung aufweisen, die zur Aufnahme des Bandagefadens ausgebildet ist.

Dies bedeutet in anderen Worten: Die Gestaltabweichung weist Vertiefungen auf, die so breit und so tief sind, dass der Bandagefaden vorzugsweise gänzlich aufnehmbar ist. Auch eine teilweise Aufnahme ist möglich.

Der Bandagefaden weist beispielsweise wenigstens eine Kohlefaser und/oder wenigstens eine Glasfaser auf.

Hierzu umfasst die Gestaltabweichung vorteilhaft eine Mehrzahl an Rillen, wobei die Rillen wenigstens im Wesentlichen äquidistant angeordnet sind, wobei die Rillen eine Höhendifferenz aufweisen die wenigstens 300 µm und höchstens 500 µm ist, wobei die Rillen eine Breitendifferenz aufweisen, die wenigstens 100 µm ist und höchstens 300 µm ist.

Vorteilhaft hat der Bandagefaden einen Durchmesser von wenigstens 100 µm und höchstens 300 µm. Der Bandagefaden kann so gut in die Rillen gelegt werden.

Dies ist vorteilhaft, da dadurch der Bandagefaden kaum oder sogar gar nicht aus dem Permanentmagneten herausragt.

Dies hat den Vorteil, dass der wirksame magnetische Luftspalt reduziert werden kann. Es wird kein weiterer Platz für die Bandage benötigt.

Die Lösung der Aufgabe gelingt ferner durch eine dynamoelektrische Maschine, insbesondere dynamoelektrische rotatorische Maschine, aufweisend einen Rotor.

Die Lösung der Aufgabe gelingt ferner durch ein Verfahren zur Herstellung eines derartigen Permanentmagneten, wobei der Permanentmagnet mittels Pulverspritzguss hergestellt wird.

Pulverspritzgießen ist auch unter den Begriff "MIM-Verfahren" (englisch für Metal Injection Moulding) bekannt.

Das Pulverspritzgießen weist vorteilhaft folgende, insbesondere aufeinanderfolgende, Prozessschritte auf:
Feedstockproduktion, Spritzgießen, Entbindern und Sintern.

Der so gefertigte Permanentmagnet kann nachbehandelt werden.

Die Feedstockproduktion gelingt vorteilhaft durch Mischung eines Metallpulvers, insbesondere Magnetpulvers, mit einem Kunststoff, vorzugsweise einem thermoplastischen Kunststoff. Die Mischung kann als Feedstock bezeichnet werden.

Der Feedstock kann auch noch andere Stoffe enthalten, beispielsweise Binder bzw. organische Binder.

Eine Erwärmung des Feedstocks ist von Vorteil.

Vorteilhaft anschließend erfolgt das Spritzen des Feedstocks zum Erhalt des Permanentmagneten.

Der Permanentmagnet wird vorteilhaft bei der Formung einer Anisotropie ausgesetzt zum Erhalt eines anisotropen Permanentmagneten. Beim Spritzen wird vorteilhaft kurzzeitig ein Magnetfeld angelegt.

Vorteilhaft anschließend erfolgt eine Abmagnetisierung.

Im Folgenden wird die Erfindung anhand der in den Figuren dargestellten Ausführungsbeispiele näher beschrieben und erläutert. Es zeigen:
- FIG 1: einen Rotor,
- FIG 2: eine weitere Ausführungsform des Rotors,
- FIG 3: eine Gestaltabweichung,
- FIG 4: eine weitere Ausführungsform der Gestaltabweichung,
- FIG 5: eine dynamoelektrische Maschine,
- FIG 6: eine weitere Ausführungsform der Permanentmagnete,
- FIG 7: ein Verfahren zur Herstellung des Permanentmagneten.

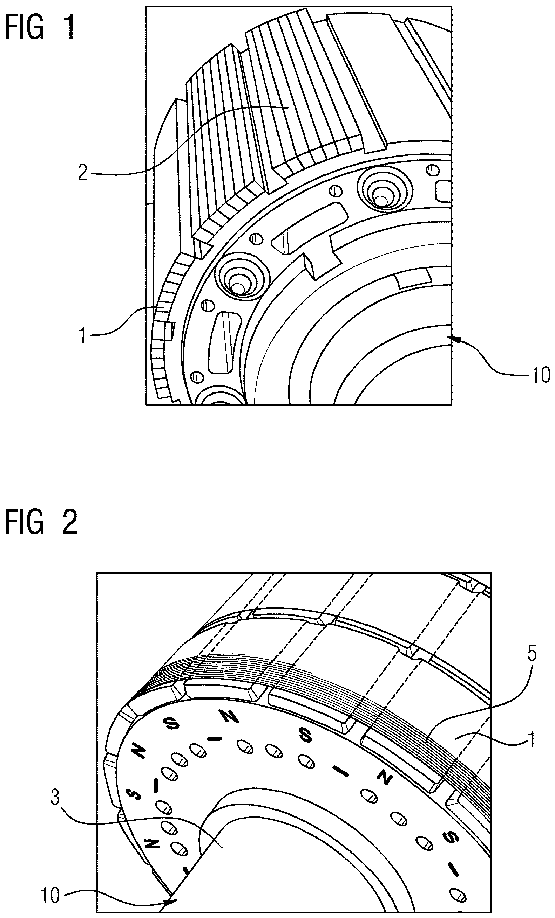

FIG 1 zeigt einen Rotor 10. Der Rotor 10 weist in der Figur eine Mehrzahl an außenliegenden Permanentmagneten auf.

Die Permanentmagnete 1 weisen eine Gestaltabweichung 2 auf.

FIG 2 zeigt eine weitere Ausführungsform des Rotors 10.

Der Rotor 10 weist eine Mehrzahl an außenliegenden Permanentmagneten 1 auf, die zur Fixierung am Rotorpaket bandagiert sind. Hierzu wurde in der Figur ein Bandagefaden 5 im Uhrzeigersinn um Permanentmagnete 1 und Rotor 10 gewickelt.

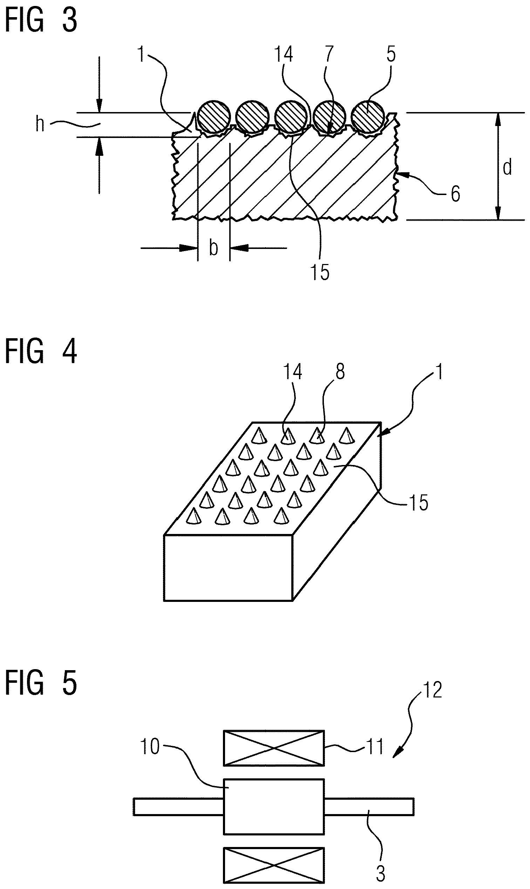

Der Bandagefaden 5 liegt hierbei, wie in FIG 3 gezeigt, vorteilhaft in halbkreisförmigen Vertiefungen 7.

Der in FIG 3 gezeigte Permanentmagnet 1 weist eine Gestaltabweichung auf, welche an einer in Richtung des Luftspalts zeigenden Oberfläche ausgebildet ist und in Form von halbkreisförmigen Vertiefungen ausgebildet ist.

Die Vertiefungen sind derart ausgebildet, dass der Bandagefaden 5 aufnehmbar ist.

Es gibt hierbei mehrere Möglichkeiten. Die Vertiefungen 7 können so tief sein, dass der Bandagefaden mit einer Fläche, welche in Richtung des Luftspalts zeigt, bündig mit der Aufdickung 14 abschließt.

Jedoch ist auch, wie in dieser Figur gezeigt, nur eine teilweise Aufnahme des Bandagefadens durch die halbkreisförmige Vertiefung 7 denkbar.

Der Permanentmagnet 1 weist zudem eine weitere Gestaltabweichung 2 an seiner Unterseite sowie an den beiden Seitenflächen auf. Diese Gestaltabweichung 2 ist in der Figur als Rauigkeit ausgebildet.

Die Figur zeigt zudem eine Dicke d des Permanentmagneten 1, eine Höhe h der Aufdickung 14 sowie eine Breite b der Vertiefung 15.

FIG 4 zeigt eine weitere Ausführungsform der Gestaltabweichung 2.

Hierbei weist die Oberfläche des Permanentmagneten 1 eine Mehrzahl an kegelförmigen Aufdickungen 8 auf.

Kegelförmige Aufdickungen 8 sind vorteilhaft für die Oberfläche bzw. Struktur für eine Bandage und zudem stellen sie eine einfach zu bildende Ausformung in einem Spritzgusswerkzeug dar.

FIG 5 zeigt die dynamoelektrische Maschine 12, aufweisend einen Stator 11, eine Welle 3 sowie den Rotor 10.

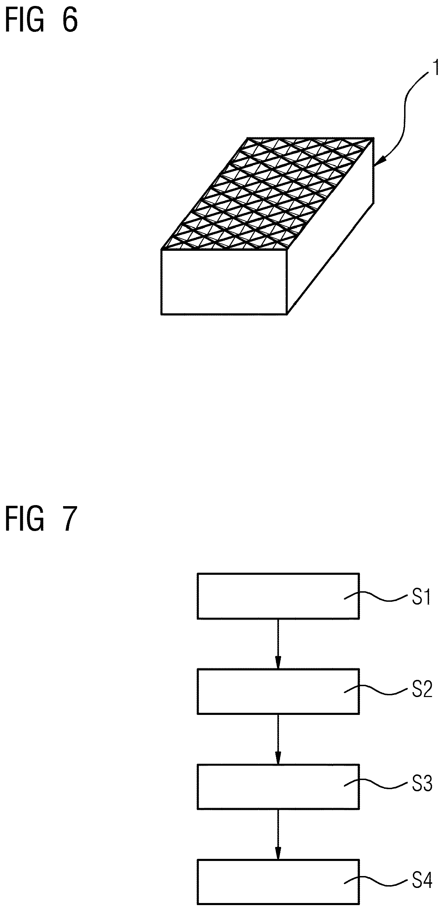

FIG 6 zeigt eine weitere Ausführungsform des Permanentmagneten 1.

Dieser weist in der Figur eine Rändelung 16 auf. Auch die Rändelung 16 ist eine Form der Gestaltabweichung 2.

Die Erfindung bietet viele Vorteile. Durch die reduzierten Ströme in den Permanentmagneten 1 erwärmen sich die Permanentmagnete 1 weniger. Somit können auch preiswertere Magnetmaterialien eingesetzt werden.

Zudem wird die Leistungs- und Drehmomentdichte der Motoren erhöht. Die Ströme werden vorteilhaft durch den Skineffekt reduziert.

Durch die Vergrößerung der Oberfläche der Permanentmagnete 1 ist zudem eine verbesserte Entwärmung gegeben, welche zu kälteren Magneten führt. Auch dies wirkt sich positiv hinsichtlich Kosten und Motorperformance aus.

Die gezielte Oberflächenstruktur zur Aufnahme des Bandagefadens führt zu einem geringeren magnetisch wirksamen Luftspalt und somit zu höheren magnetischen Induktionen, was mit einer erhöhten Leistungs- und Drehmomentdichte einhergeht.

Zudem kann durch das eingesetzte Fertigungsverfahren mittels Pulverspritzguss ein hoher Freiheitsgrad hinsichtlich Gestaltabweichungen erreicht werden. Die Permanentmagnete 1 können flexibel gestaltet werden.

FIG 7 zeigt ein Verfahren zur Herstellung des Permanentmagneten 1.

Das Pulverspritzgießen weist vorteilhaft folgende, insbesondere aufeinanderfolgende, Prozessschritte auf:
In einem Verfahrensschritt S1 erfolgt eine Feedstockproduktion.

Die Feedstockproduktion gelingt vorteilhaft durch Mischung eines Metallpulvers, insbesondere Magnetpulvers, mit einem Kunststoff, vorzugsweise einem thermoplastischen Kunststoff. Die Mischung kann als Feedstock bezeichnet werden.

Der Feedstock kann auch noch andere Stoffe enthalten, beispielsweise Binder bzw. organische Binder.

Eine Erwärmung des Feedstocks ist von Vorteil.

In einem Verfahrensschritt S2 erfolgt ein Spritzgießen.

In S2 erfolgt das Spritzen des Feedstocks zum Erhalt des Permanentmagneten.

Der Permanentmagnet wird vorteilhaft bei der Formung einem gerichteten Magnetfeld ausgesetzt zum Erhalt eines anisotropen Permanentmagneten. Beim Spritzen wird vorzugsweise kurzzeitig ein Magnetfeld angelegt.

In einem Verfahrensschritt S3 erfolgt ein Entbindern, also ein Austreiben von Bindemittel.

Das Entbindern erfolgt vorzugsweise bei einer Temperatur von 200°C bis 400°C.

In einem Verfahrensschritt S4 erfolgt ein Sintern.

Das Sintern erfolgt vorzugsweise bei einer Temperatur von 900°C bis 1100°C.

So wird der Permanentmagnet 1 gut verfestigt.

## Patentansprüche

1. Permanentmagnet (1) für eine dynamoelektrische Maschine, insbesondere dynamoelektrische rotatorische Maschine (12), aufweisend eine Gestaltabweichung (2, 6, 7) an einer Oberfläche des Permanentmagneten (1), wobei die Gestaltabweichung (2, 6, 7) wenigstens eine Aufdickung (14) und wenigstens eine Vertiefung (15) umfasst, wobei eine Höhendifferenz (h) zwischen einer höchsten Stelle der Aufdickung (14) und einer tiefsten Stelle der Vertiefung (15) wenigstens 2% einer Dicke (d) des Permanentmagneten (1) und höchstens 20% der Dicke (d) des Permanentmagneten (1) ist.

2. Permanentmagnet nach Anspruch 1, wobei die Höhendifferenz (h) wenigstens 5% der Dicke (d) des Permanentmagneten (1) und höchstens 20% der Dicke (d) des Permanentmagneten (1) ist.

3. Permanentmagnet (1) nach einem der vorhergehenden Ansprüche, wobei die Höhendifferenz (h) wenigstens 10 µm und höchstens 1000 µm ist.

4. Permanentmagnet (1) nach einem der vorhergehenden Ansprüche, wobei die Höhendifferenz (h) wenigstens 10 µm und höchstens 500 µm ist.

5. Permanentmagnet (1) nach einem der vorhergehenden Ansprüche, wobei die Gestaltabweichung als Welligkeit und/oder in Form von Rillen und/oder in Form von Riefen und/oder in Form von halbkreisförmigen Kanälen ausgebildet ist.

6. Permanentmagnet (1) nach einem der vorhergehenden Ansprüche, wobei die Gestaltabweichung in Form von kegelförmigen Aufdickungen (8) ausgebildet ist.

7. Permanentmagnet (1), wobei die Gestaltabweichung als Rändelung ausgebildet ist.

8. Permanentmagnet nach einem der vorhergehenden Ansprüche, wobei eine Breitendifferenz zwischen zwei benachbarten Aufdickungen wenigstens 10 µm und höchstens 300 µm ist.

9. Permanentmagnet nach einem der vorhergehenden Ansprüche, aufweisend wenigstens eine weitere Gestaltabweichung, wobei die Höhendifferenz der Gestaltabweichung wenigstens 10 µm und höchstens 100 µm ist, wobei die Höhendifferenz der weiteren Gestaltabweichung wenigstens 300 µm und höchstens 500 µm ist.

10. Rotor für eine dynamoelektrische rotatorische Maschine, aufweisend:
- ein Rotorpaket,
- eine Mehrzahl an Permanentmagneten nach einem der Ansprüche 1 bis 9,
- eine Bandage zur Fixierung der Permanentmagnete am Rotorpaket, wobei die Bandage einen Bandagefaden aufweist,
wobei die Permanentmagnete eine Gestaltabweichung aufweisen, die zur Aufnahme des Bandagefadens ausgebildet ist.

11. Rotor nach Anspruch 10, wobei die Gestaltabweichung eine Mehrzahl an Rillen umfasst, wobei die Rillen wenigstens im Wesentlichen äquidistant angeordnet sind, wobei die Rillen eine Höhendifferenz aufweisen, die wenigstens 300 µm und höchstens 500 µm ist, wobei die Rillen eine Breitendifferenz aufweisen, die wenigstens 100 µm und höchstens 300 µm ist.

12. Dynamoelektrische Maschine, insbesondere dynamoelektrische rotatorische Maschine, aufweisend einen Rotor nach einem der Ansprüche 10 oder 11.

13. Verfahren zur Herstellung eines Permanentmagneten nach einem der Ansprüche 1 bis 9, wobei der Permanentmagnet mittels Pulverspritzguss hergestellt wird.
